# EUROPEAN PATENT SPECIFICATION

(11) **EP 4 586 120 B1**
(45) Date of publication and mention of the grant of the patent: **08.07.2026**
(21) Application number: 24801816.0
(22) Date of filing: 30.05.2024
(51) Int. Cl.: G06F 21/71, G06F 21/53, H04L 9/08, H04L 9/32

(54) **CONFIDENTIAL COMPUTING ENVIRONMENT CREATION METHOD, CRYPTOGRAPHIC OPERATION METHOD, CRYPTOGRAPHIC OPERATION SYSTEM, ELECTRONIC DEVICE, AND STORAGE MEDIUM**
VERFAHREN ZUR ERZEUGUNG EINER VERTRAULICHEN COMPUTERUMGEBUNG, KRYPTOBETRIEBSVERFAHREN, KRYPTOBETRIEBSSYSTEM, ELEKTRONISCHE VORRICHTUNG UND SPEICHERMEDIUM
PROCÉDÉ DE CRÉATION D'ENVIRONNEMENT INFORMATIQUE CONFIDENTIEL, PROCÉDÉ D'OPÉRATION CRYPTOGRAPHIQUE, SYSTÈME D'OPÉRATION CRYPTOGRAPHIQUE, DISPOSITIF ÉLECTRONIQUE ET SUPPORT DE STOCKAGE

(30) Priority: 29.11.2023 CN 202311617297
(43) Date of publication of application: 16.07.2025
(73) Proprietor: Hygon Information Technology Co., Ltd., Tianjin 300392 (CN)
(72) Inventor: YING, Zhiwei, Tianjin 300392 (CN); CHEN, Shan, Tianjin 300392 (CN)
(74) Representative: Regimbeau
(86) International application number: PCT/CN2024/096235
(87) International publication number: WO 2025/112388

(56) References cited:
- WO-A1-2023/283460
- CN-A- 112 052 446
- CN-A- 113 312 613
- CN-A- 114 647 868
- CN-A- 115 344 871
- CN-A- 116 700 897
- CN-A- 116 700 897
- CN-A- 117 592 079
- US-A1- 2023 068 521
- US-A1- 2023 069 781
- US-B1- 10 693 638

## Description

### TECHNICAL FIELD

Embodiments of the present disclosure relate to a method for creating a confidential computing environment, a crypto operation method, a crypto operation system, an electronic device, and a storage medium.

### BACKGROUND

The crypto technique is a technique for realizing information confidentiality, which has been extensively applied in the use of computers. A main way of applying the crypto technique is crypto operation. For example, data is encrypted and decrypted through crypto operations, thereby preventing the data from being malicious stealing; and data is digitally signed through the crypto operation, thereby guaranteeing the authenticity and security of the data. In a modern computer system architecture, the crypto operation may be implemented based on a specialized crypto module (CM), and a corresponding crypto module is configured in an electronic device to perform the crypto operation. In this context, how to provide a technical solution to improve the overall performance of the electronic device has become a technical problem to be urgently solved by those skilled in the art. US 2023/068521 A1, US 2023/069781 A1, WO 2023/283460 Al and CN 116 700 897 A have been used to draw up the European search report and examine the European patent application.

### SUMMARY

In view of the above, embodiments of the present disclosure provide a method for creating a confidential computing environment, a crypto operation method, a crypto operation system, an electronic device, and a storage medium to improve the overall performance of the electronic device.

In a first aspect, the embodiments of the present disclosure provide a method for creating a confidential computing environment, which is applied to a crypto module manager and includes:
acquiring image information of a crypto module;
determining a hardware resource required for running the crypto module based on the image information of the crypto module;
generating a confidential computing environment creation request based on the hardware resource required for running the crypto module; and
sending the confidential computing environment creation request, to enable that a confidential environment manager creates a confidential computing environment matching a running requirement of the crypto module based on the confidential computing environment creation request, wherein the running requirement of the crypto module is compatible with the hardware resource required for running the crypto module.

Optionally, the determining the hardware resource required for running the crypto module based on the image information of the crypto module includes:
determining a performance configuration file of the crypto module based on the image information of the crypto module; and
determining a total number of processor cores and a memory resource required for running the crypto module based on the performance configuration file.

Optionally, the generating the confidential computing environment creation request based on the hardware resource required for running the crypto module includes: generating the confidential computing environment creation request based on the total number of processor cores and the memory resource required for running the crypto module.

Optionally, after the sending the confidential computing environment creation request, the method further includes:
sending the image information of the crypto module, to enable that the confidential environment manager loads the image information of the crypto module into the created confidential computing environment, thereby enabling the crypto module to be run in the confidential computing environment.

In a second aspect, the embodiments of the present disclosure provide a method for creating a confidential computing environment, which is applied to a confidential environment manager and includes:
acquiring a confidential computing environment creation request sent by a crypto module manager, wherein the confidential computing environment creation request is generated by the crypto module manager based on a hardware resource required for running a crypto module, and the hardware resource required for running the crypto module is determined by the crypto module manager based on acquired image information of the crypto module; and
creating a confidential computing environment matching a running requirement of the crypto module based on the confidential computing environment creation request, wherein the running requirement of the crypto module is compatible with the hardware resource required for running the crypto module.

Optionally, the confidential computing environment creation request includes a total number of processor cores and a memory resource required for running the crypto module.

Optionally, the creating the confidential computing environment matching the running requirement of the crypto module based on the confidential computing environment creation request includes:
configuring, based on the total number of processor cores, a corresponding number of processor cores to the confidential computing environment; and
configuring, based on the memory resource, a corresponding memory address to the confidential computing environment.

Optionally, after the creating the confidential computing environment matching the running requirement of the crypto module, the method further includes:
acquiring the image information of the crypto module sent by the crypto module manager, and loading the image information of the crypto module into the confidential computing environment to run the crypto module in the confidential computing environment.

In a third aspect, the embodiments of the present disclosure provide a crypto operation method, which is applied to a confidential computing environment created by the method for creating a confidential computing environment according to the above-mentioned first aspect and/or second aspect, and includes:
acquiring a key file and obtaining a key for a crypto operation based on the key file, by a crypto module;
sending, by a crypto application, a verification request to the crypto module to verify the integrity of the crypto module; and
in response to the crypto module being integral, invoking, by the crypto application, the crypto module to perform the crypto operation.

Optionally, the crypto module includes a sealing key; and
the obtaining, by the crypto module, the key for the crypto operation based on the key file includes: decrypting, by the crypto module, the key file utilizing the sealing key to obtain the key for the crypto operation.

Optionally, the crypto module utilizes a crypto operation module to assist in performing the crypto operation; and
the invoking, by the crypto application, the crypto module to perform the crypto operation includes: invoking, by the crypto application, the crypto module, and performing, by the crypto module, the crypto operation utilizing the crypto operation module.

In a fourth aspect, the embodiments of the present disclosure provide a crypto operation system, which includes at least a crypto module, a crypto application, a crypto module manager, and a confidential environment manager;
the crypto module manager and the confidential environment manager are configured to create a confidential computing environment matching a running requirement of the crypto module;
the crypto module is configured to acquire a key file and obtain a key for a crypto operation based on the key file in the confidential computing environment; and
the crypto application is configured to send a verification request to the crypto module to verify the integrity of the crypto module in the confidential computing environment, wherein in response to the crypto module being integral, the crypto application invokes the crypto module to perform the crypto operation.

Optionally, the crypto module manager includes:
an information acquisition unit, configured to acquire image information of the crypto module;
a resource determination unit, configured to determine a hardware resource required for running the crypto module based on the image information of the crypto module;
a request generation unit, configured to generate a confidential computing environment creation request based on the hardware resource required for running the crypto module; and
a request sending unit, configured to send the confidential computing environment creation request, to enable that the confidential environment manager creates the confidential computing environment matching the running requirement of the crypto module based on the confidential computing environment creation request, wherein the running requirement of the crypto module is compatible with the hardware resource required for running the crypto module.

Optionally, the confidential environment manager includes:
a request acquisition unit, configured to acquire the confidential computing environment creation request sent by the crypto module manager; and
an environment creation unit, configured to create the confidential computing environment matching the running requirement of the crypto module based on the confidential computing environment creation request.

Optionally, the crypto operation system further includes a crypto operation module configured to assist the crypto module in performing the crypto operation in the confidential computing environment.

In a fifth aspect, the embodiments of the present disclosure provide an electronic device, which includes at least one memory and at least one processor; the memory stores one or more computer-executable instructions; and the processor invokes the one or more computer-executable instructions to perform the method for creating a confidential computing environment according to the above-mentioned first aspect and/or second aspect, and/or to perform the crypto operation method according to the above-mentioned third aspect.

In a sixth aspect, the embodiments of the present disclosure provide a storage medium, which stores one or more computer-executable instructions, and the one or more computer-executable instructions, when executed, implement the method for creating a confidential computing environment according to the above-mentioned first aspect and/or second aspect, and/or implement the crypto operation method according to the above-mentioned third aspect.

The method for creating a confidential computing environment provided by the embodiments of the present disclosure is applied to a crypto module manager and includes: acquiring image information of a crypto module; determining a hardware resource required for running the crypto module based on the image information of the crypto module; generating a confidential computing environment creation request based on the hardware resource required for running the crypto module; and sending the confidential computing environment creation request, to enable that a confidential environment manager creates a confidential computing environment matching a running requirement of the crypto module based on the confidential computing environment creation request, in which the running requirement of the crypto module is compatible with the hardware resource required for running the crypto module.

In the embodiments of the present disclosure, the crypto module manager determines the hardware resource required for running the crypto module based on the image information of the crypto module. The confidential computing environment creation request is generated, to enable that the confidential environment manager creates the confidential computing environment matching the running requirement of the crypto module. Thus, the confidential computing environment created by the confidential environment manager can meet the performance requirement of the crypto module. Furthermore, the running requirement of the crypto module matching the confidential computing environment is compatible with the hardware resource required for running the crypto module. Thus, the hardware resource may be avoided from being wasted, and the overall performance of the electronic device may be improved.

### BRIEF DESCRIPTION OF DRAWINGS

In order to more clearly illustrate the technical solutions in the embodiments of the present disclosure, the drawings to be used in the description of the embodiments will be briefly described below. Obviously, the drawings in the following description are only some embodiments. For those ordinarily skilled in the art, other drawings may be obtained based on these drawings without inventive work.
Fig. 1 is a schematic diagram of an optional structure of a processor in an electronic device;
Fig. 2 is a schematic diagram of an optional architecture of a crypto operation system provided by the embodiments of the present disclosure;
Fig. 3 is a schematic diagram of an internal structure of a crypto module provided by the embodiments of the present disclosure;
Fig. 4 is an optional flowchart of a method for creating a confidential computing environment provided by the embodiments of the present disclosure;
Fig. 5 is an optional schematic diagram of step S31 provided by the embodiments of the present disclosure;
Fig. 6 is an optional schematic diagram of step S35 provided by the embodiments of the present disclosure;
Fig. 7 is an optional flowchart of a crypto operation method provided by the embodiments of the present disclosure;
Fig. 8 is a schematic diagram of another optional architecture of a crypto operation system provided by the embodiments of the present disclosure;
Fig. 9 is a schematic diagram of an optional structure of a crypto module manager provided by the embodiments of the present disclosure;
Fig. 10 is a schematic diagram of an optional structure of a confidential environment manager provided by the embodiments of the present disclosure;
Fig. 11 is a schematic diagram of yet another optional architecture of a crypto operation system provided by the embodiments of the present disclosure; and
Fig. 12 is an optional block diagram of an electronic device provided by the embodiments of the present disclosure.

### DETAILED DESCRIPTION

The technical solutions of the embodiments of the present disclosure will be described in a clearly and fully understandable way in connection with the drawings of the embodiments of the present disclosure. Apparently, the described embodiments are just a part but not all of the embodiments of the present disclosure. Based on the embodiments of the present disclosure, those ordinarily skilled in the art can obtain other embodiment(s), without any inventive work, which should be within the scope of the present disclosure.

As described in the background, in a modern computer system architecture, the crypto operation may be implemented based on a specialized crypto module (CM). A corresponding crypto module is configured in an electronic device and then called to perform a crypto operation.

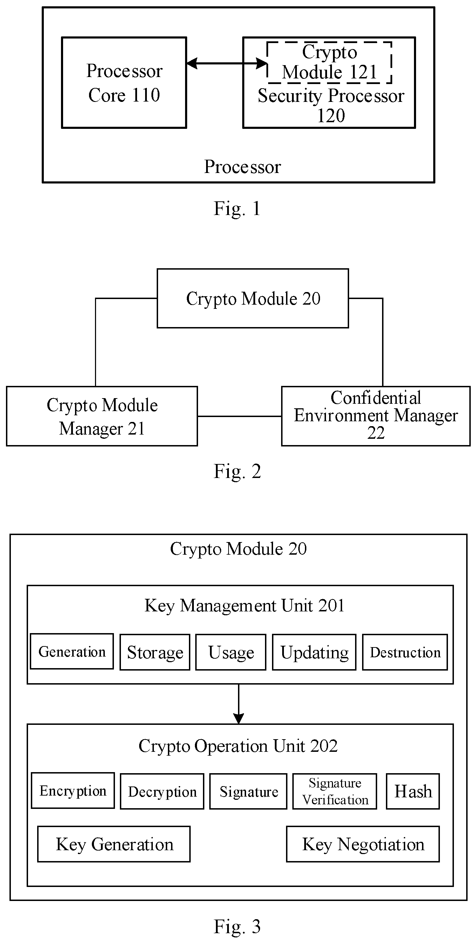

As an optional implementation, the crypto module may be set based on high security level hardware in the electronic device, to enable that the running security of the crypto module is guaranteed while the crypto operation of the crypto module is implemented. Fig. 1 exemplarily illustrates a schematic diagram of an optional structure of a processor (e.g., a central processing unit, CPU) in an electronic device. As shown in Fig. 1, the processor may include a processor core 110 and a security processor 120.

It may be appreciated that the security processor 120 is a hardware device which is independent of and isolated from the processor core 110, and for the hardware resource of the security processor 120, the processor core 110 is inaccessible, e.g., an internal storage of the security processor 120. Because the security processor has an independent executable resource, an enclosed executable environment may be constituted. Therefore, except for data actively shared to the external by the security processor, the data of the security processor per se cannot be accessed from the external. Thus, when a crypto operation is performed on data, the crypto operation of the crypto module may be implemented based on the enclosed executable environment provided by the security processor, thereby guaranteeing the security of the crypto operation.

In a specific example, the crypto module may be set based on the security processor 120. The crypto module 121 is set within the security processor 120, and a command interface is provided by the security processor 120 to the crypto module 121, to enable that the crypto module 121 realizes information interaction with the processor core 110 based on the command interface for use by an application on the processor core 110. In an example, a program applying the crypto module may be referred to as a crypto application.

However, the inventors have found that due to limitations of the hardware architecture of the processor, a fixed number of security processors are integrated within the processor. Therefore, when facing constantly changing crypto operation requirements in the system, the way of setting the crypto module based on the security processor cannot realize flexible configuration of the crypto module, thereby affecting the crypto operation performance. For example, in the case where more encryption and data protection tasks need to be processed, the fixed number of security processors may result in insufficient processing capability of the crypto module for different types of crypto operations. For another example, the crypto operation requirements of the crypto application on the processor are reduced, and the fixed number of security processors with crypto modules may lead to wasting of processor hardware resources. In addition, because the security processor is a processor used exclusively for the safety function and devoted to perform security related operations. With respect to the processor, the security processor does not need to process a high-performance computing task, which results in the security processor typically having low performance in terms of data processing frequency, caching, and the like, thereby limiting the performance of the crypto module. Consequently, the overall performance of the electronic device is reduced.

In addition, it should be noted that the security processor is integrated within the processor on the premise that the processor needs to provide a hardware support for the security processor, e.g., a support such as an encryption/decryption engine and a cache. However, most processor chips cannot provide the above supports, which further limits the general applicability of setting the crypto module within the security processor, and having the security processor provide a secure executable environment for crypto operations.

It is especially necessary to provide a solution for improving the overall performance of an electronic device.

In view of the above, the embodiments of the present disclosure provide the following improved technical solutions: the crypto module manager determines the hardware resource required for running the crypto module based on the image information of the crypto module; the confidential computing environment creation request is generated, to enable that the confidential environment manager creates a confidential computing environment matching the running requirement of the crypto module. Thus, the confidential computing environment created by the confidential environment manager can meet the performance requirement of the crypto module. Furthermore, the running requirement of the crypto module matching the confidential computing environment is compatible with the hardware resource required for running the crypto module. Thus, the hardware resource can be avoided from being wasted, and the overall performance of the electronic device can be improved.

Fig. 2 exemplarily illustrates a schematic diagram of an optional architecture of a crypto operation system provided by the embodiments of the present disclosure. As shown in Fig. 2, the crypto operation system includes at least a crypto module (CM) 20, a crypto module manager (also referred to as "CM manager") 21, and a confidential environment manager (also referred to as "CCE manager") 22.

The crypto module 20 is a module having the crypto operation functionality to perform the crypto operation based on invoking of the crypto application. Fig. 3 shows a schematic diagram of an internal structure of a crypto module, and the crypto module 20 may include a key management unit 201 and a crypto operation unit 202. The key management unit 201 is configured for full lifecycle management on a key, including generation, storage, usage, updating, destruction, and the like of the key. Typically, the plaintext of a key can only occur within the crypto module, and if the key leaves the crypto module, it needs to be encrypted for protection. The crypto operation unit 202 is configured to implement crypto algorithms of various standards, including encryption, decryption, signature, signature verification, MAC message authentication code computation (shown as Hash in the figure), key generation, key negotiation, and the like, where the MAC message authentication code computation may be, for example, achieved using a Hash function. An original message and a key are input together to the Hash function for computation to obtain an authentication code. The authentication code may be a value of a fixed length for verifying the integrity and authenticity of a message.

The crypto module manager 21 is configured to manage the crypto module 20 that performs the crypto operation, and is capable of creating a confidential computing environment (CCE) for the crypto module 20 to perform the crypto operation utilizing the confidential environment manager 22. Moreover, the confidential computing environment is isolated from a current running environment of the processor, to enable that the crypto operation process of the crypto module 20 running in the confidential computing environment is confidential, safe and invisible to the external. Only an input and an output to and from the crypto operation system can be visible to the external, thereby effectively guaranteeing the security of the crypto operation.

The confidential environment manager 22 is configured to manage the confidential computing environment and has an authority of creating or destructing the confidential computing environment.

It should be noted that in the case where the crypto operation system of the embodiments of the present disclosure creates the confidential computing environment isolated from the current running environment of the processor in the current running environment of the processor, the processor is required to provide hardware mechanism supports that can substantially support the confidential computing environment. Thus, based on the hardware mechanisms of the processor, the confidentiality, integrity and authenticity of the crypto application running in the confidential computing environment can be guaranteed. The hardware mechanisms provided by the processor may be, for example, hardware security module, memory protection, secure startup, etc. In an optional example, a secure virtualization technique may be employed to realize the creation of the confidential computing environment by a virtual machine.

The confidential computing environment creating solutions of the embodiments of the present disclosure are described in detail below based on the crypto operation system architecture described above.

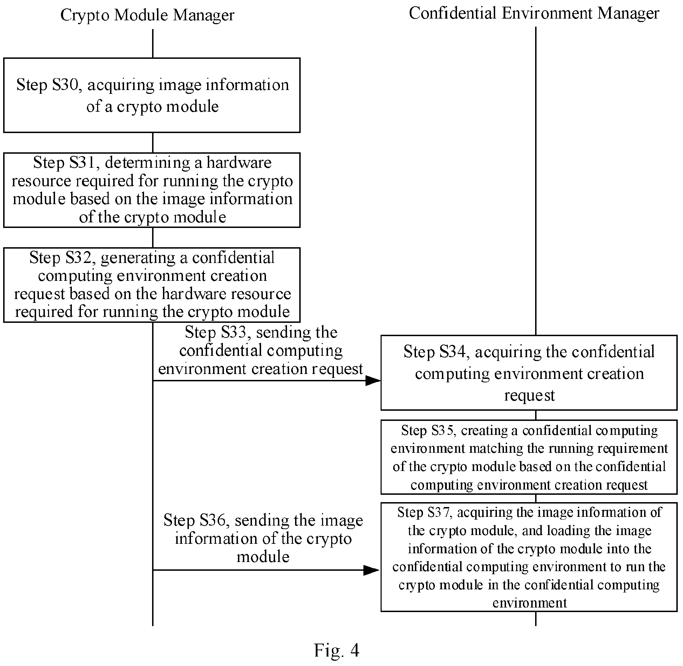

Fig. 4 exemplarily illustrates an optional flowchart of a method for creating a confidential computing environment provided by the embodiments of the present disclosure. The process of the method may be implemented by the crypto module, the crypto module manager, the confidential environment manager in the crypto operation system shown in Fig. 2. As shown in Fig. 4, the process of the method may include the following steps.

In step S30, acquiring image information of a crypto module, by the crypto module manager.

The crypto module may be in a state of waiting to start, e.g., when the system is not powered on for start, or when it is not invoked by the crypto application. Moreover, there may be different types of crypto modules according to different external interfaces, including interface types that comply with standards such as "GM/T 0018-2012 Interface specifications of cryptography device application" and "GM/T 0016-2012 Smart token cryptography application interface specification", and custom interface types.

When the crypto module needs to be started, the crypto module manager may acquire the image information of the crypto module. The crypto module may be a crypto module that the crypto application needs to invoke. The image information of the crypto module is a file copy containing the program code related to the crypto module. There may be different image information for different uses of the crypto modules, or different image information may be developed according to user requirements. The image information may also be referred to as a program image.

In an example, the image information of the crypto module may typically include: an encryption algorithm program, such as a symmetric encryption algorithm (such as AES and DES), an asymmetric encryption algorithm (such as RSA and ECC), and a Hash algorithm (such as MD5 and SHA-256), which is used for the crypto module to perform operations such as encryption, decryption, signature, and verification; a key management program for the crypto module to generate, store and manage a key, where the key may be a symmetric key or an asymmetric key for encrypting and decrypting data; an authentication and authorization program for the crypto module to verify the identity of a user and controlling the user's access to system resources according to the authority of the user; a secure communication protocol, such as SSL/TLS and IPsec, for the crypto module to protect the security and integrity of data in a communication process; and a secure storage program for the crypto module to protect the storage of sensitive data.

It should be noted that the image information of the crypto module is stored on a hard disk, and the crypto module manager may directly read the image information of the corresponding crypto module from the hard disk as required, or read the image information on the hard disk by a processor. This is not limited in the embodiments of the present disclosure and may be set correspondingly according to an actual requirement.

In step S31, determining a hardware resource required for running the crypto module based on the image information of the crypto module, by the crypto module manager.

It may be appreciated that different crypto modules have different crypto operation performance. In the embodiments of the present disclosure, the performance of the crypto module can be determined based on the crypto module related program code contained in the image information of the crypto module such that the hardware resource required for running the crypto module is determined. For example, a crypto module with higher performance may serve crypto applications on a plurality of different processor cores so that the data contents of different crypto applications can be stored. Alternatively, a crypto module with lower performance may only serve a crypto application on a single processor core, and the data content of the crypto application on the processor core can be stored such that the hardware resource allocated to the crypto module meets the performance requirement of the crypto module.

In step S32, generating a confidential computing environment creation request based on the hardware resource required for running the crypto module, by the crypto module manager.

The confidential computing environment creation request is used for requesting creation of a confidential computing environment for the crypto module, to enable that the crypto module runs in the corresponding confidential computing environment, thereby guaranteeing the security of the crypto operation.

Based on the running of the crypto module, the corresponding hardware resource is needed. Therefore, the crypto module manager may generate the confidential computing environment creation request based on the hardware resource required for running the crypto module, so that the confidential computing environment can meet the performance requirement of the crypto module.

In step S33, sending the confidential computing environment creation request, by the crypto module manager, to the confidential environment manager.

In the case where the crypto module manager creates the confidential computing environment for the crypto module to perform the crypto operation utilizing the confidential environment manager, the crypto module manager can send the confidential computing environment creation request to the confidential environment manager, to enable that the confidential environment manager creates the confidential computing environment matching the running requirement of the crypto module based on the confidential computing environment creation request. The running requirement of the crypto module may be compatible with the hardware resource required for running the crypto module. Thus, the hardware resource can be avoided from being wasted. The crypto operation capability of the crypto module can be fully utilized in the created confidential computing environment, and the overall performance of the electronic device can be improved.

In step S34, acquiring the confidential computing environment creation request, by the confidential environment manager, sent by the crypto module manager.

In step S35, creating a confidential computing environment matching the running requirement of the crypto module based on the confidential computing environment creation request, by the confidential environment manager.

The running requirement of the crypto module is compatible with the hardware resource required for running the crypto module.

It may be appreciated that, in the case where the confidential environment manager correspondingly creates the confidential computing environment for the crypto module based on the confidential computing environment creation request generated by the crypto module manager according to the hardware resource required for running the crypto module, the confidential computing environment can meet the performance requirement of the crypto module so that the crypto operation accommodating to the performance of the crypto module can be performed in the confidential computing environment. The crypto operation capability of the crypto module can be fully utilized, and the overall performance of the electronic device can be improved.

In the embodiments of the present disclosure, the crypto module manager determines the hardware resource required for running the crypto module based on the image information of the crypto module. The confidential computing environment creation request is generated to enable that the confidential environment manager creates the confidential computing environment matching the running requirement of the crypto module. Thus, the confidential computing environment created by the confidential environment manager can meet the performance requirement of the crypto module. Furthermore, the running requirement of the crypto module matching the confidential computing environment is compatible with the hardware resource required for running the crypto module. Thus, the hardware resource can be avoided from being wasted, and the overall performance of the electronic device can be improved.

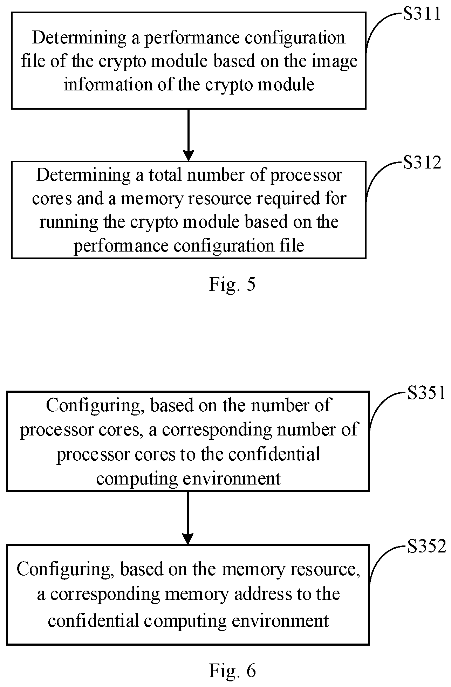

In some embodiments, in the case where the image information of the crypto module contains the crypto module related program code, parameter information such as the performance of the crypto module can be determined with the image information. As shown in Fig. 5, step S31 may specifically include the following steps.

In step S311, determining a performance configuration file of the crypto module based on the image information of the crypto module.

The performance configuration file of the crypto module refers to a running parameter or a configuration file of the crypto module set based on a system running requirement. A running use strategy, a memory use strategy and the like of the crypto module can be set based on the performance configuration file.

In step S312, determining a total number of processor cores and a memory resource required for running the crypto module based on the performance configuration file.

The performance configuration file contains the running use strategy and the memory use strategy of the crypto module, and thus can reflect the capability of the crypto module to perform the crypto operation.

It may be appreciated that the electronic device further includes hardware devices such as a memory and a processor. The crypto application on the processor can invoke the crypto module to perform the crypto operation. Thus, the data of the crypto operation needs to be cached. Moreover, in a processor having a plurality of processor cores, the crypto application may be present in one or more processor cores. Therefore, the number of processor cores and the memory resource corresponding to the crypto module may be determined based on the performance configuration file of the crypto module. For example, for the plurality of processor cores of the processor, based on the performance of crypto modules, the crypto modules are flexibly assigned to the plurality of processor cores for use, to enable that the crypto modules perform the crypto operations of the plurality of processor cores, and the crypto operation efficiency of the device can be improved. In terms of the memory, according to the performance of the crypto module, the memory resource meeting the performance requirement of the crypto module is reasonably allocated, avoiding the memory from being insufficient or over-allocated.

In some embodiments, based on the determined number of processor cores and memory resource required for running the crypto module, in step S32, generating the confidential computing environment creation request based on the hardware resource required for running the crypto module may specifically include: generating the confidential computing environment creation request based on the number of processor cores and the memory resource required for running the crypto module.

Thus, the confidential computing environment creation request acquired by the confidential environment manager may include the number of processor cores and the memory resource required for running the crypto module. Thus, in the case where the confidential environment manager creates the confidential computing environment according to the confidential computing environment creation request, the created confidential computing environment can meet the performance requirement of the crypto module.

Further, in the case where the confidential computing environment creation request acquired by the confidential environment manager included the number of processor cores and the memory resource required for running the crypto module, as shown in Fig. 6, step S35 may specifically include the following steps.

In step S351, configuring, based on the number of processor cores, a corresponding number of processor cores to the confidential computing environment.

In step S352, configuring, based on the memory resource, a corresponding memory address to the confidential computing environment.

With continued reference to Fig. 4, in some embodiments, to enable the crypto module managed by the crypto module manager to run in the confidential computing environment created by the confidential environment manager, after the confidential environment manager creates the confidential computing environment, the crypto module manager needs to send the relevant information of the crypto module to the confidential environment manager, and the following steps may be further included.

In step S36, sending the image information of the crypto module, by the crypto module manager, to the confidential environment manager.

The crypto module manager sends the image information of the crypto module to the confidential environment manager, to enable that the confidential environment manager loads the image information of the crypto module into the created confidential computing environment so as to run the crypto module in the confidential computing environment.

In step S37, acquiring, by the confidential environment manager, the image information of the crypto module sent by the crypto module manager, and loading the image information of the crypto module into the confidential computing environment to run the crypto module in the confidential computing environment.

It should be noted that based on the confidential computing environment created by the method for creating a confidential computing environment in the embodiments of the present disclosure, in the case where the crypto module manager needs to destruct the crypto module, e.g., cancel the usage of the crypto module in the system, the crypto module manager may send a confidential computing environment destructing request corresponding to the crypto module to the confidential environment manager, to enable that the confidential environment manager destructs the confidential computing environment, thereby destructing the crypto module running in the confidential computing environment.

In the embodiments of the present disclosure, the crypto module manager determines the hardware resource required for running the crypto module based on the image information of the crypto module. The confidential computing environment creation request is generated to enable that the confidential environment manager creates the confidential computing environment matching the running requirement of the crypto module. Thus, the confidential computing environment created by the confidential environment manager can meet the performance requirement of the crypto module. Furthermore, the running requirement of the crypto module matching the confidential computing environment is compatible with the hardware resource required for running the crypto module. Thus, the hardware resource can be avoided from being wasted, and the overall performance of the electronic device can be improved.

Based on the confidential computing environment created by the method for creating a confidential computing environment described above, the embodiments of the present disclosure further provide a crypto operation method. The crypto operation method may be applied to the confidential computing environment.

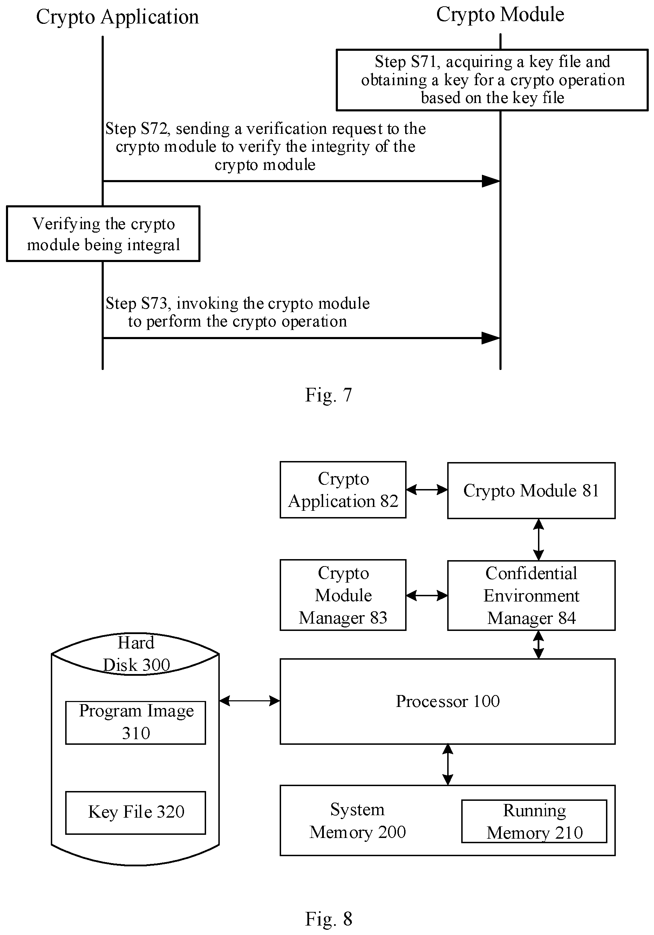

As an optional implementation, Fig. 7 exemplarily illustrates an optional flowchart of a crypto operation method provided in an embodiment of the present disclosure. The process of the method may be implemented by a crypto module and a crypto application. As shown in Fig. 7, the process of the method may include the following steps.

In step S71, acquiring a key file and obtaining a key for a crypto operation based on the key file, by a crypto module.

The key file refers to a file for storing a key required for performing a crypto operation, where the key file is in a correspondence with the crypto module, and the correspondence is maintained by a crypto module manager. When the crypto module needs to be run, the crypto module can accurately acquire the key file based on the correspondence between the crypto module and the key file maintained by the crypto module manager.

In an optional example, in order to implement the integrity and security of the key file, the key file may be an encrypted file. In order to obtain the key for the crypto operation recorded in the key file, the crypto module may include a sealing key. The sealing key may correspond to an encryption key of the key file. Thus, the crypto module can decrypt the key file utilizing the sealing key to obtain the key for the crypto operation. The key file of the crypto module may be stored on a hard disk. Thus, the corresponding key file can be directly read from the hard disk as required, or the key file on the hard disk can be read by a processor. This is not limited in the embodiments of the present disclosure and may be set correspondingly according to an actual requirement.

It should be noted that the sealing key of the crypto module is bound to a program (i.e., the image information of the crypto module) that runs the crypto module in the confidential computing environment. The sealing key of the crypto module can only be acquired within the confidential computing environment and cannot be acquired or falsified outside the confidential computing environment. Moreover, the sealing key may be specifically bound to the integrity of a running program of the crypto module. In response to the integrity of the running program of the crypto module being broken, the corresponding sealing key is not available and the key file cannot be decrypted. In response to the sealing key being available, the key file can be decrypted, indicating that the image information file of the crypto module is integral and not falsified. Thus, the security of the key obtained by decrypting the key file with the sealing key is guaranteed.

In addition, in the case where the sealing key is bound to the crypto module program running in the confidential computing environment, the sealing key may be obtained based on the image information loaded into the confidential computing environment. For example, the sealing key may be generated from a Hash metric value of the image information of the crypto module. Thus, when the image information of the crypto module changes, the sealing key pertaining to the crypto module changes accordingly. A generation approach of the sealing key of the crypto module may be determined by a processor hardware characteristic supporting the confidential computing environment. Different processors have different generation approaches as long as the generated sealing key is bound to the feature value of the crypto module program running in the confidential computing environment supported by the processor.

In an example, the key file may contain a user key. When the crypto module is invoked by a user to alter the user key, the crypto module may encrypt the altered user key with the sealing key and store it to the key file, to update the user key stored in the key file. Thus, the integrity of the key stored in the key file is guaranteed.

In step S72, sending a verification request to the crypto module to verify the integrity of the crypto module, by a crypto application .

In the case where the crypto application has a usage requirement on the crypto module, in order to keep the accuracy of the crypto operation, the crypto application may first verify the authenticity of the confidential computing environment and the integrity of the crypto module, thereby guaranteeing the accuracy of data in the crypto module. That is, the data has not been lost or altered. The verification request may be then sent to the crypto module.

In a specific example, the crypto application may remotely authenticate the crypto module based on a remote authentication mechanism of confidential computing and send a remote authentication request to the crypto module through the confidential computing environment. The crypto module acquires the remote authentication request and generates an authentication report by utilizing the hardware mechanism of the confidential computing environment provided by the processor. The authentication report may contain contents such as an image information metric value of the crypto module, and is signed by a key marking the identity of the confidential computing environment. The crypto module sends the signed authentication report to the crypto application through the confidential computing environment. After acquiring the authentication report, the crypto application first verifies the signature of the confidential computing environment to determine the authenticity of the report and then verifies the information such as the image information metric value of the crypto module in the authentication report to confirm the integrity of the crypto module.

It should be noted that the above-mentioned example is merely an optional implementation of the crypto application verifying the integrity of the crypto module, which may also be correspondingly set as required and is not limited in the embodiments of the present disclosure.

In response to determining that the crypto application verifies that the crypto module is integral, step S73 may be performed, and the step S73 includes invoking the crypto module to perform the crypto operation, by the crypto application.

In some embodiments, in order to provide efficient crypto operation capability, the crypto module may utilize a crypto operation module to assist in performing the crypto operation, where the crypto operation module may be a hardware module having the crypto operation capability and can perform various crypto algorithms meeting standards, such as encryption, decryption, signature, signature verification, MAC message authentication code computation, key generation, and key negotiation. Thus, the crypto application invokes the crypto module to perform the crypto operation based on the assisting action of the crypto operation module for the crypto module, which may be specifically as follows: the crypto application invokes the crypto module, and the crypto module performs the crypto operation utilizing the crypto operation module.

The embodiments of the present disclosure can realize the crypto operation of the crypto module in the confidential computing environment and guarantee the security of the crypto operation, and in the case where the confidential computing environment matches the running requirement of the crypto module, the performance requirement of the crypto module can be effectively met; the hardware resource may not be wasted; and the overall performance of the electronic device can be improved.

The embodiments of the present disclosure further provide a crypto operation system. Fig. 8 exemplarily illustrates a schematic diagram of another optional structure of a crypto operation system provided by the embodiments of the present disclosure. As shown in Fig. 8, the crypto operation system may include at least a crypto module 81, a crypto application 82, a crypto module manager 83, and a confidential environment manager 84. The crypto module manager 83 and the confidential environment manager 84 are configured to create a confidential computing environment matching the running requirement of the crypto module 81.

The crypto module 81 is configured to acquire a key file and obtain a key for a crypto operation based on the key file in the confidential computing environment.

The crypto application 82 is configured to send a verification request to the crypto module to verify the integrity of the crypto module in the confidential computing environment, where in response to the crypto module being integral, the crypto application invokes the crypto module to perform the crypto operation.

Optionally, the crypto module 81 may include a sealing key.

The step of obtaining, by the crypto module 81, the key for the crypto operation based on the key file specifically includes: decrypting the key file utilizing the sealing key to obtain the key for the crypto operation.

Optionally, the crypto module 81 may assist, utilizing a crypto operation module, in performing the crypto operation.

The step of invoking, by the crypto application 82, the crypto module to perform the crypto operation specifically includes: invoking, by the crypto application, the crypto module, and performing, by the crypto module, the crypto operation using the crypto operation module.

It should be noted that the crypto module, the crypto application, the crypto module manager and the confidential environment manager are software functional modules needing to be set for the crypto operation system to implement the method for creating a confidential computing environment and/or the crypto operation method provided in the embodiments of the present disclosure. The crypto operation system provided in the embodiments of the present disclosure may further include a hardware composition of a processor 100, a system memory 200 and a hard disk 300 as shown in Fig. 8.

For example, the hardware of the processor 100 supports confidential computing characteristics, enabling the confidential environment manager to create or destruct, as required, the isolated running environment, i.e., the confidential computing environment, in the current running environment of the processor. Moreover, the hardware mechanism of the processor 100 guarantees the confidentiality, the integrity and the authenticity of the program running in the confidential computing environment. The processor 100 may be, for example, a central processing unit (CPU).

The system memory 200 is a physical device for storing data and a program in a computer, and includes a running memory 210. The running memory 210 may be a memory correspondingly allocated based on the confidential computing environment. Thus, the processor 100 may protect the confidentiality and the integrity of the running memory 210 of the system memory 200 allocated to the confidential computing environment to guarantee that only the program running in the confidential computing environment can normally access the running memory 210, thereby preventing illegal access of a program outside the confidential computing environment to the running memory 210.

The hard disk 300 includes information such as a program image 310 of the crypto module and a key file 320. The program image 310 is a file copy containing a crypto module related program code, which may be referred to as the image information of the crypto module, and the sealing key of the crypto module may be obtained based on the program image 310. For example, a sealing key is generated according to a Hash metric value of the program image, and when the program image changes, the sealing key pertaining to the crypto module changes accordingly, and the sealing key may be bound to the program image. Thus, in the case where the crypto module runs in the confidential computing environment, the sealing key may only be acquired within the confidential computing environment and cannot be acquired or falsified outside the confidential computing environment. In a specific example, the sealing key may be bound to the integrity of the running program of the crypto module. In response to the integrity of the running program of the crypto module being broken, the corresponding sealing key is not available. In addition, the generation approach of the sealing key may be determined by the processor hardware characteristic supporting the confidential computing environment. Different processors have different generation approaches as long as the generated sealing key is bound to a feature value of the crypto module program running in the confidential computing environment supported by the processor. The key file 320 is a file for storing a key required for performing a crypto operation by the crypto module, and is in a correspondence with the crypto module. Moreover, the key file 320 is information needing to be saved persistently. In order to ensure the security of the file, the key file 320 may be an encrypted file. In an example, the key file 320 is in a correspondence with the crypto module 81. In the case where the sealing key of the crypto module is generated, the key file 320 may be encrypted with the sealing key, and the encrypted key file 320 is stored to the hard disk 300. In a specific example, the sealing key may be bound to the integrity of the running program of the crypto module, in response to the integrity of the running program of the crypto module being broken, the corresponding sealing key is not available and the key file cannot be decrypted. In response to the sealing key being available, the key file can be decrypted with the sealing key.

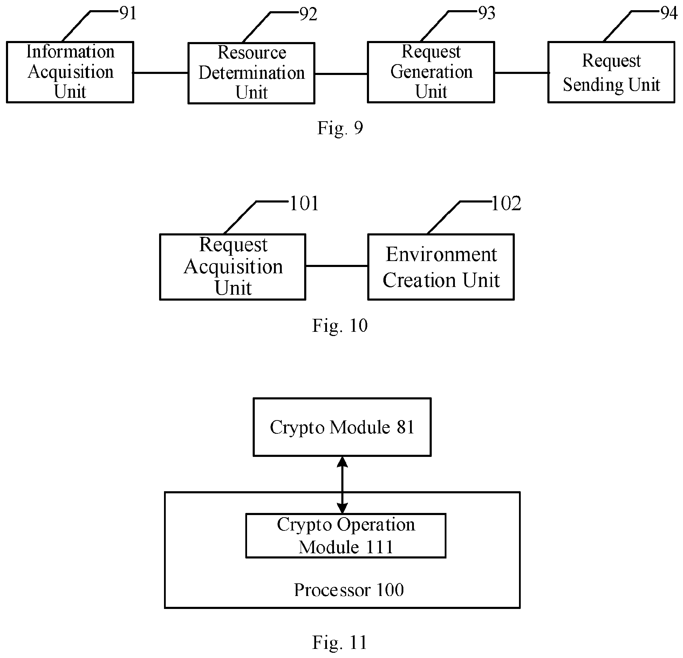

In some embodiments, based on the created confidential computing environment matching the running requirement of the crypto module, Fig. 9 exemplarily illustrates a schematic diagram of an optional structure of a crypto module manager provided by the embodiments of the present disclosure. As shown in Fig. 9, the crypto module manager may include an information acquisition unit 91, a resource determination unit 92, a request generation unit 93, and a request sending unit 94.

The information acquisition unit 91 is configured to acquire image information of the crypto module.

The resource determination unit 92 is configured to determine a hardware resource required for running the crypto module based on the image information of the crypto module.

The request generation unit 93 is configured to generate a confidential computing environment creation request based on the hardware resource required for running the crypto module.

The request sending unit 94 is configured to send the confidential computing environment creation request, to enable that the confidential environment manager creates the confidential computing environment matching the running requirement of the crypto module based on the confidential computing environment creation request, where the running requirement of the crypto module is compatible with the hardware resource required for running the crypto module.

Optionally, the step of determining, by the resource determination unit 92, the hardware resource required for running the crypto module based on the image information of the crypto module includes:
determining a performance configuration file of the crypto module based on the image information of the crypto module; and
determining a total number of processor cores and a memory resource required for running the crypto module based on the performance configuration file.

Optionally, the step of generating, by the request generation unit 93, the confidential computing environment creation request based on the hardware resource required for running the crypto module specifically includes: generating the confidential computing environment creation request based on the total number of processor cores and the memory resource required for running the crypto module.

Optionally, after sending the confidential computing environment creation request, the request sending unit 94 is further configured to send the image information of the crypto module, to enable that the confidential environment manager loads the image information of the crypto module into the created confidential computing environment so as to run the crypto module in the confidential computing environment.

In some embodiments, based on the created confidential computing environment matching the running requirement of the crypto module, Fig. 10 exemplarily illustrates a schematic diagram of an optional structure of a confidential environment manager provided by the embodiments of the present disclosure. As shown in Fig. 10, the confidential environment manager may include a request acquisition unit 101 and an environment creation unit 102.

The request acquisition unit 101 is configured to acquire the confidential computing environment creation request sent by the crypto module manager.

The confidential computing environment creation request may be generated by the crypto module manager based on the hardware resource required for running the crypto module, and the hardware resource required for running the crypto module may be determined by the crypto module manager based on acquired image information of the crypto module.

The environment creation unit 102 is configured to create the confidential computing environment matching the running requirement of the crypto module based on the confidential computing environment creation request.

The running requirement of the crypto module may be compatible with the hardware resource required for running the crypto module.

Optionally, the confidential computing environment creation request acquired by the request acquisition unit 101 may include a total number of processor cores and a memory resource required for running the crypto module.

Optionally, the step of creating, by the environment creation unit 102, the confidential computing environment matching the running requirement of the crypto module based on the confidential computing environment creation request may include:
configuring, based on the total number of processor cores, a corresponding number of processor cores to the confidential computing environment; and
configuring, based on the memory resource, a corresponding memory address to the confidential computing environment.

Optionally, after creating the confidential computing environment matching the running requirement of the crypto module, the environment creation unit 102 may be further configured to acquire the image information of the crypto module, and load the image information of the crypto module into the confidential computing environment to run the crypto module in the confidential computing environment.

In some embodiments, Fig. 11 exemplarily illustrates a schematic diagram of yet another optional architecture of a crypto operation system provided by the embodiments of the present disclosure. As shown in Fig. 11, the crypto operation system may further include a crypto operation module 111.

The crypto operation module 111 is a module having the crypto operation functionality. Based on a crypto operation requirement of the crypto module, in an optional implementation, the crypto operation module 111 may be a functional module integrated within the crypto module for performing the crypto operation, i.e., a crypto operation unit of the crypto module.

In another optional implementation, the crypto operation module 111 may be a hardware module having the crypto operation capability integrated within a processor 100, and can perform various crypto algorithms meeting standards, such as encryption, decryption, signature, signature verification, MAC message authentication code computation, key generation, and key negotiation, for assisting the crypto module managed by the crypto module manager with the crypto operation. The crypto operation module can safely provide the crypto operation capability to the crypto module. For example, based on the hardware support of the processor, the crypto operation module is set to only receive a crypto operation request from a certain confidential computing environment. Thus, the crypto operation requests from crypto modules in the confidential computing environment are provided with a tag identifying the confidential computing environment. Upon receiving the crypto operation request, the crypto operation module first identifies the tag of the confidential computing environment to ensure the information interaction security. Thus, the crypto operation performance of the electronic device can be improved.

In an optional example, in the case where the crypto operation system has a plurality of modules with the crypto operation functionality, the crypto modules may be correspondingly selected according to requirements. For example, a crypto operation unit is set within the crypto module in the crypto operation system, and hardware of the crypto operation module is set within the processor. In the case where the crypto application has a high-performance operation requirement on the crypto module, the crypto module may select to use the crypto operation module integrated within the processor (as shown in Fig. 11).

It should be noted that a key management unit set within the crypto module can implement full lifecycle management on a key, including generation, storage, use, updating, destruction, and the like of the key. The crypto operation unit can implement crypto algorithms of various standards, including encryption, decryption, signature, signature verification, MAC message authentication code computation, key generation, key negotiation, and the like. Thus, in the case where the crypto operation module set within the processor can perform various crypto algorithms meeting standards, such as encryption, decryption, signature, signature verification, MAC message authentication code computation, key generation, and key negotiation, the key management unit in the crypto module may select whether to utilize the crypto operation module within the processor to perform the crypto operation according to an operation requirement of the crypto module.

The embodiments of the present disclosure further provide an electronic device. The electronic device may include at least one memory and at least one processor. The memory stores one or more computer-executable instructions; and the processor invokes the one or more computer-executable instructions to perform the method for creating a confidential computing environment provided by the embodiments of the present disclosure and/or the crypto operation method provided by the embodiments of the present disclosure.

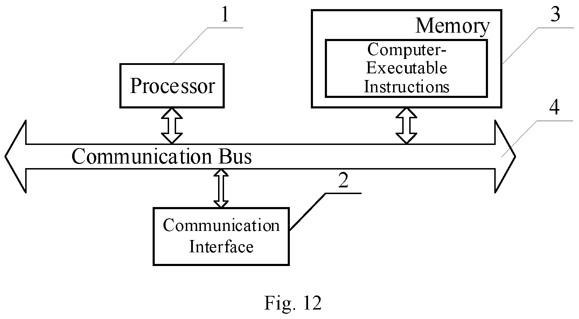

As an optional implementation, Fig. 12 is an optional block diagram of an electronic device provided by the embodiments of the present disclosure. As shown in Fig. 12, the electronic device may include at least one processor 1, at least one communication interface 2, at least one memory 3, and at least one communication bus 4.

In the embodiments of the present disclosure, the number of processors 1, communication interfaces 2, memories 3, or communication buses 4 is at least one, and the processor 1, the communication interface 2, and the memory 3 are in communication with one another by means of the communication bus 4.

Optionally, the communication interface 2 may be an interface of a communication module for network communication.

Optionally, the processor 1 may be a central processing unit (CPU), a graphics processing unit (GPU), a neural-network process unit (NPU), a field programmable gate array (FPGA), a tensor processing unit (TPU), an AI chip, or an application specific integrated circuit (ASIC), or is configured as one or more integrated circuits for implementing the embodiments of the present disclosure, etc.

The memory 3 may include a high-speed random-access memory (RAM), or may further include a non-volatile memory, for example, at least one magnetic disk memory.

The memory 3 is configured to store one or more computer-executable instructions; and the processor 1 is configured to invoke the one or more computer-executable instructions to perform the crypto operation method provided by the embodiments of the present disclosure.

The embodiments of the present disclosure further provide a storage medium, storing one or more computer-executable instructions which, when executed, cause the method for creating a confidential computing environment and/or the crypto operation method performed by an electronic device in the embodiments of the present disclosure to be implemented.

A plurality of embodiment solutions provided by the embodiments of the present disclosure are described above. The optional ways described in the embodiment solutions may be combined with and cross-referenced to one another in a non-conflicting manner so that a plurality of possible embodiment solutions can be derived. These can all be considered as embodiment solutions disclosed by the embodiments of the present disclosure.

Although being disclosed as described above, the present disclosure is not limited thereto. The protection scope of the present disclosure is subject to the scope defined by the claims.

## Claims

1. A method for creating a confidential computing environment, applied to a crypto module manager, and comprising:
acquiring image information of a crypto module (S30);
determining a hardware resource required for running the crypto module based on the image information of the crypto module (S31);
generating a confidential computing environment creation request based on the hardware resource required for running the crypto module (S32); and
sending the confidential computing environment creation request (S33), to enable that a confidential environment manager creates a confidential computing environment matching a running requirement of the crypto module based on the confidential computing environment creation request, wherein the running requirement of the crypto module is compatible with the hardware resource required for running the crypto module.

2. The method for creating a confidential computing environment according to claim **1,** wherein the determining the hardware resource required for running the crypto module based on the image information of the crypto module (S31) comprises:
determining a performance configuration file of the crypto module based on the image information of the crypto module (S311); and
determining a total number of processor cores and a memory resource required for running the crypto module based on the performance configuration file (S312).

3. The method for creating a confidential computing environment according to claim 2, wherein the generating the confidential computing environment creation request based on the hardware resource required for running the crypto module (S32) comprises: generating the confidential computing environment creation request based on the total number of processor cores and the memory resource required for running the crypto module.

4. The method for creating a confidential computing environment according to any one of claims 1 to 3, after the sending the confidential computing environment creation request (S33), further comprising:
sending the image information of the crypto module (S36), to enable that the confidential environment manager loads the image information of the crypto module into the created confidential computing environment, thereby enabling the crypto module to be run in the confidential computing environment.

5. A method for creating a confidential computing environment, applied to a confidential environment manager, and comprising:
acquiring a confidential computing environment creation request sent by a crypto module manager (S34), wherein the confidential computing environment creation request is generated by the crypto module manager based on a hardware resource required for running a crypto module, and the hardware resource required for running the crypto module is determined by the crypto module manager based on acquired image information of the crypto module; and
creating a confidential computing environment matching a running requirement of the crypto module based on the confidential computing environment creation request (S35), wherein the running requirement of the crypto module is compatible with the hardware resource required for running the crypto module.

6. The method for creating a confidential computing environment according to claim 5, wherein the confidential computing environment creation request comprises a total number of processor cores and a memory resource required for running the crypto module.

7. The method for creating a confidential computing environment according to claim 6, wherein the creating the confidential computing environment matching the running requirement of the crypto module based on the confidential computing environment creation request (S35) comprises:
configuring, based on the total number of processor cores, a corresponding number of processor cores to the confidential computing environment (S351); and
configuring, based on the memory resource, a corresponding memory address to the confidential computing environment (S352).

8. The method for creating a confidential computing environment according to any one of claims 5 to 7, after the creating the confidential computing environment matching the running requirement of the crypto module (S35), further comprising:
acquiring the image information of the crypto module sent by the crypto module manager, and loading the image information of the crypto module into the confidential computing environment to run the crypto module in the confidential computing environment (S37).

9. A crypto operation method, applied to a confidential computing environment created by the method for creating a confidential computing environment according to any one of claims 1 to 4 and/or any one of claims 5 to 8, and comprising:
acquiring a key file and obtaining a key for a crypto operation based on the key file, by a crypto module (S71);
sending, by a crypto application, a verification request to the crypto module to verify the integrity of the crypto module (S72); and
in response to the crypto module being integral, invoking, by the crypto application, the crypto module to perform the crypto operation (S73).

10. The crypto operation method according to claim 9, wherein the crypto module comprises a sealing key;
the obtaining, by the crypto module, the key for the crypto operation based on the key file comprises: decrypting, by the crypto module, the key file utilizing the sealing key to obtain the key for the crypto operation;
the crypto module utilizes a crypto operation module to assist in performing the crypto operation; and
the invoking, by the crypto application, the crypto module to perform the crypto operation (S73) comprises: invoking, by the crypto application, the crypto module, and performing, by the crypto module, the crypto operation utilizing the crypto operation module.

11. A crypto operation system, comprising at least a crypto module (81), a crypto application (82), a crypto module manager (83), and a confidential environment manager (84),
wherein the crypto module manager (83) and the confidential environment manager (84) are configured to create a confidential computing environment matching a running requirement of the crypto module;
the crypto module (81) is configured to acquire a key file and obtain a key for a crypto operation based on the key file in the confidential computing environment; and
the crypto application (82) is configured to send a verification request to the crypto module (81) to verify the integrity of the crypto module (81) in the confidential computing environment, wherein in response to the crypto module (81) being integral, the crypto application (82) invokes the crypto module (81) to perform the crypto operation.

12. The crypto operation system according to claim 11, wherein the crypto module manager (83) comprises:
an information acquisition unit (91), configured to acquire image information of the crypto module (81);
a resource determination unit (92), configured to determine a hardware resource required for running the crypto module (81) based on the image information of the crypto module (81);
a request generation unit (93), configured to generate a confidential computing environment creation request based on the hardware resource required for running the crypto module (81); and
a request sending unit (94), configured to send the confidential computing environment creation request, to enable that the confidential environment manager (84) creates the confidential computing environment matching the running requirement of the crypto module (81) based on the confidential computing environment creation request, wherein the running requirement of the crypto module (81) is compatible with the hardware resource required for running the crypto module (81); and
the confidential environment manager (84) comprises:
a request acquisition unit (101), configured to acquire the confidential computing environment creation request sent by the crypto module manager (83); and
an environment creation unit (102), configured to create the confidential computing environment matching the running requirement of the crypto module (81) based on the confidential computing environment creation request.

13. The crypto operation system according to claim 11 or 12, further comprising a crypto operation module (111) configured to assist the crypto module (81) in performing the crypto operation in the confidential computing environment.

14. An electronic device, comprising at least one memory (3) and at least one processor (1), wherein the memory (3) stores one or more computer-executable instructions; and the processor (1) invokes the one or more computer-executable instructions to perform the method for creating a confidential computing environment according to any one of claims 1 to 4 and/or any one of claims 5 to 8, and/or to perform the crypto operation method according to claim 9 or 10.

15. A storage medium, storing one or more computer-executable instructions, wherein the one or more computer-executable instructions, when executed, implement the method for creating a confidential computing environment according to any one of claims 1 to 4 and/or any one of claims 5 to 8, and/or implement the crypto operation method according to claim 9 or 10.

## Patentansprüche

1. Verfahren zum Erstellen einer vertrauenswürdigen Datenverarbeitungsumgebung, das auf einen Kryptomodulverwalter angewandt wird und Folgendes umfasst:
Erfassen von Bildinformationen eines Kryptomoduls (S30);
Bestimmen einer Hardwareressource, die zum Ausführen des Kryptomoduls erforderlich ist, auf Basis der Bildinformationen des Kryptomoduls (S31);
Erzeugen einer Anforderung zum Erstellen einer vertrauenswürdigen Datenverarbeitungsumgebung auf Basis der Hardwareressource, die zum Ausführen des Kryptomoduls erforderlich ist, (S32); und
Senden der Anforderung zum Erstellen einer vertrauenswürdigen Datenverarbeitungsumgebung (S33), um es zu ermöglichen, dass ein Verwalter für eine vertrauenswürdige Umgebung auf Basis der Anforderung zum Erstellen einer vertrauenswürdigen Datenverarbeitungsumgebung eine vertrauenswürdige Datenverarbeitungsumgebung erstellt, die mit einer Ausführungsanforderung des Kryptomoduls übereinstimmt, wobei die Ausführungsanforderung des Kryptomoduls mit der Hardwareressource, die zum Ausführen des Kryptomoduls erforderlich ist, kompatibel ist.

2. Verfahren zum Erstellen einer vertrauenswürdigen Datenverarbeitungsumgebung nach Anspruch 1, wobei das Bestimmen der Hardwareressource, die zum Ausführen des Kryptomoduls erforderlich ist, auf Basis der Bildinformationen des Kryptomoduls (S31) Folgendes umfasst:
Bestimmen einer Leistungsauslegungsdatei des Kryptomoduls auf Basis der Bildinformationen des Kryptomoduls (S311); und
Bestimmen einer Gesamtzahl von Prozessorkernen und einer Speicherressource, die zum Ausführen des Kryptomoduls erforderlich sind, auf Basis der Leistungsauslegungsdatei (S312).

3. Verfahren zum Erstellen einer vertrauenswürdigen Datenverarbeitungsumgebung nach Anspruch 2, wobei das Erzeugen der Anforderung zum Erstellen der vertrauenswürdigen Datenverarbeitungsumgebung auf Basis der Hardwareressource, die zum Ausführen des Kryptomoduls erforderlich ist (S32), Folgendes umfasst: Erzeugen der Anforderung zum Erstellen der vertrauenswürdigen Datenverarbeitungsumgebung auf Basis der Gesamtzahl von Prozessorkernen und der Speicherressource, die zum Ausführen des Kryptomoduls erforderlich sind.

4. Verfahren zum Erstellen einer vertrauenswürdigen Datenverarbeitungsumgebung nach einem der Ansprüche 1 bis 3, das nach dem Senden der Anforderung zum Erstellen der vertrauenswürdigen Datenverarbeitungsumgebung (S33) ferner Folgendes umfasst:
Senden der Bildinformationen des Kryptomoduls (S36), um es zu ermöglichen, dass der Verwalter für eine vertrauenswürdige Umgebung die Bildinformationen des Kryptomoduls in die erstellte vertrauenswürdige Datenverarbeitungsumgebung lädt und es dadurch ermöglicht, dass das Kryptomodul in der vertrauenswürdigen Datenverarbeitungsumgebung ausgeführt wird.

5. Verfahren zum Erstellen einer vertrauenswürdigen Datenverarbeitungsumgebung, das auf einen Verwalter einer vertrauenswürdigen Umgebung angewandt wird und Folgendes umfasst:
Erfassen einer Anforderung zum Erstellen einer vertrauenswürdigen Datenverarbeitungsumgebung, die von einem Kryptomodulverwalter gesendet wird (S34), wobei die Anforderung zum Erstellen der vertrauenswürdigen Datenverarbeitungsumgebung vom Kryptomodulverwalter auf Basis einer Hardwareressource erzeugt wird, die zum Ausführen eines Kryptomoduls erforderlich ist, und die Hardwareressource, die zum Ausführen des Kryptomoduls erforderlich ist, vom Kryptomodulverwalter auf Basis von erfassten Bildinformationen des Kryptomoduls bestimmt wird; und
Erstellen einer vertrauenswürdigen Datenverarbeitungsumgebung, die mit einer Ausführungsanforderung des Kryptomoduls übereinstimmt, auf Basis der Anforderung zum Erstellen einer vertrauenswürdigen Datenverarbeitungsumgebung (S35), wobei die Ausführungsanforderung des Kryptomoduls mit der Hardwareressource, die zum Ausführen des Kryptomoduls erforderlich ist, kompatibel ist.

6. Verfahren zum Erstellen einer vertrauenswürdigen Datenverarbeitungsumgebung nach Anspruch 5, wobei die Anforderung zum Erstellen der vertrauenswürdigen Datenverarbeitungsumgebung eine Gesamtzahl von Prozessorkernen und eine Speicherressource umfasst, die zum Ausführen des Kryptomoduls erforderlich sind.

7. Verfahren zum Erstellen einer vertrauenswürdigen Datenverarbeitungsumgebung nach Anspruch 6, wobei das Erstellen der vertrauenswürdigen Datenverarbeitungsumgebung, die mit der Ausführungsanforderung des Kryptomoduls übereinstimmt, auf Basis der Anforderung zum Erstellen der vertrauenswürdigen Datenverarbeitungsumgebung (S35) Folgendes umfasst:
Auslegen einer entsprechenden Anzahl von Prozessorkernen auf Basis der Gesamtzahl von Prozessorkernen für die vertrauenswürdige Datenverarbeitungsumgebung (S351); und
Auslegen einer entsprechenden Speicheradresse auf Basis der Speicherressource für die vertrauenswürdige Datenverarbeitungsumgebung (S352).

8. Verfahren zum Erstellen einer vertrauenswürdigen Datenverarbeitungsumgebung nach einem der Ansprüche 5 bis 7, das nach dem Erstellen der vertrauenswürdigen Datenverarbeitungsumgebung, die mit der Ausführungsanforderung des Kryptomoduls erforderlich ist (S35), ferner Folgendes umfasst:
Erfassen der Bildinformationen des Kryptomoduls, die vom Kryptomodulverwalter gesendet werden, und Laden der Bildinformationen des Kryptomoduls in die vertrauenswürdige Datenverarbeitungsumgebung, um das Kryptomodul in der vertrauenswürdigen Datenverarbeitungsumgebung auszuführen (S37).

9. Kryptooperationsverfahren, das auf eine vertrauenswürdige Datenverarbeitungsumgebung angewandt wird, die durch das Verfahren zum Erstellen einer vertrauenswürdigen Datenverarbeitungsumgebung nach einem der Ansprüche 1 bis 4 und/oder einem der Ansprüche 5 bis 8 erstellt wurde, und Folgendes umfasst:
Erfassen einer Schlüsseldatei und Erhalten eines Schlüssels für eine Kryptooperation auf Basis der Schlüsseldatei durch ein Kryptomodul (S71);
Senden einer Verifizierungsanforderung durch eine Kryptoanwendung an das Kryptomodul, um die Integrität des Kryptomoduls zu verifizieren (S72); und
in Reaktion darauf, dass das Kryptomodul integer ist, Aufrufen des Kryptomoduls durch die Kryptoanwendung, um die Kryptooperation durchzuführen (S73).

10. Kryptooperationsverfahren nach Anspruch 9, wobei das Kryptomodul einen Versiegelungsschlüssel umfasst;
das Erhalten des Schlüssels für die Kryptooperation durch das Kryptomodul auf Basis der Schlüsseldatei umfasst Folgendes: Entschlüsseln der Schlüsseldatei durch das Kryptomodul unter Verwendung des Versiegelungsschlüssels, um den Schlüssel für die Kryptooperation zu erhalten;
das Kryptomodul verwendet ein Kryptooperationsmodul zum Unterstützen des Durchführens der Kryptooperation; und
das Aufrufen des Kryptomoduls durch die Kryptoanwendung, um die Kryptooperation durchzuführen (S73), umfasst Folgendes: Aufrufen des Kryptomoduls durch die Kryptoanwendung und Durchführen der Kryptooperation durch das Kryptomodul unter Verwendung des Kryptooperationsmoduls.

11. Kryptooperationssystem, das mindestens ein Kryptomodul (81), eine Kryptoanwendung (82), einen Kryptomodulverwalter (83) und einen Verwalter für eine vertrauenswürdige Umgebung (84) umfasst,
wobei der Kryptomodulverwalter (83) und der Verwalter für die vertrauenswürdige Umgebung (84) dazu ausgelegt sind, eine vertrauenswürdige Datenverarbeitungsumgebung zu erstellen, die mit einer Ausführungsanforderung des Kryptomoduls übereinstimmt;
das Kryptomodul (81) ist dazu ausgelegt, eine Schlüsseldatei zu erfassen und einen Schlüssel für eine Kryptooperation auf Basis der Schlüsseldatei in der vertrauenswürdigen Datenverarbeitungsumgebung zu erhalten; und
die Kryptoanwendung (82) ist dazu ausgelegt, eine Verifizierungsanforderung an das Kryptomodul (81) zu senden, um die Integrität des Kryptomoduls (81) in der vertrauenswürdigen Datenverarbeitungsumgebung zu verifizieren, wobei in Reaktion darauf, dass das Kryptomodul (81) integer ist, die Kryptoanwendung (82) das Kryptomodul (81) aufruft, um die Kryptooperation durchzuführen.

12. Kryptooperationssystem nach Anspruch 11, wobei der Kryptomodulverwalter (83) Folgendes umfasst:
eine Informationserfassungseinheit (91), die dazu ausgelegt ist, Bildinformationen des Kryptomoduls (81) zu erfassen;
eine Ressourcenbestimmungseinheit (92), die dazu ausgelegt ist, eine Hardwareressource, die zum Ausführen des Kryptomoduls (81) erforderlich ist, auf Basis der Bildinformationen des Kryptomoduls (81) zu bestimmen;
eine Anforderungserzeugungseinheit (93), die dazu ausgelegt ist, eine Anforderung zum Erstellen einer vertrauenswürdigen Datenverarbeitungsumgebung auf Basis der Hardwareressource zu erzeugen, die zum Ausführen des Kryptomoduls (81) erforderlich ist; und
eine Anforderungssendeeinheit (94), die dazu ausgelegt ist, die Anforderung zum Erstellen einer vertrauenswürdigen Datenverarbeitungsumgebung zu senden, um es zu ermöglichen, dass der Verwalter für eine vertrauenswürdige Umgebung (84) auf Basis der Anforderung zum Erstellen einer vertrauenswürdigen Datenverarbeitungsumgebung die vertrauenswürdige Datenverarbeitungsumgebung erstellt, die mit der Ausführungsanforderung des Kryptomoduls (81) übereinstimmt, wobei die Ausführungsanforderung des Kryptomoduls (81) mit der Hardwareressource, die zum Ausführen des Kryptomoduls (81) erforderlich ist, kompatibel ist; und
der Verwalter für die vertrauenswürdige Umgebung (84) umfasst Folgendes:
eine Anforderungserfassungseinheit (101), die dazu ausgelegt ist, die Anforderung zum Erstellen der vertrauenswürdigen Datenverarbeitungsumgebung, die vom Kryptomodulverwalter (83) gesendet wird, zu erfassen; und
eine Umgebungserstellungseinheit (102), die dazu ausgelegt ist, die vertrauliche Datenverarbeitungsumgebung, die mit der Ausführungsanforderung des Kryptomoduls (81) übereinstimmt, auf Basis der Anforderung zum Erstellen der vertrauenswürdigen Datenverarbeitungsumgebung zu erstellen.

13. Kryptooperationssystem nach Anspruch 11 oder 12, das ferner ein Kryptooperationsmodul (111) umfasst, das dazu ausgelegt ist, das Kryptomodul (81) beim Durchführen der Kryptooperation in der vertrauenswürdigen Datenverarbeitungsumgebung zu unterstützen.

14. Elektronische Vorrichtung, die mindestens einen Speicher (3) und mindestens einen Prozessor (1) umfasst, wobei im Speicher (3) eine oder mehrere computerausführbare Anweisungen gespeichert sind; und der Prozessor (1) die eine oder die mehreren computerausführbaren Anweisungen aufruft, um das Verfahren zum Erstellen einer vertrauenswürdigen Datenverarbeitungsumgebung nach einem der Ansprüche 1 bis 4 und/oder einem der Ansprüche 5 bis 8 durchzuführen und/oder das Kryptooperationsverfahren nach Anspruch 9 oder 10 durchzuführen.

15. Speichermedium, in dem eine oder mehrere computerausführbare Anweisungen gespeichert sind, wobei die eine oder die mehreren computerausführbaren Anweisungen, wenn sie ausgeführt werden, das Verfahren zum Erstellen einer vertrauenswürdigen Datenverarbeitungsumgebung nach einem der Ansprüche 1 bis 4 und/oder einem der Ansprüche 5 bis 8 implementieren und/oder das Kryptooperationsverfahren nach Anspruch 9 oder 10 implementieren.

## Revendications

1. Procédé de création d'un environnement informatique confidentiel, appliqué à un gestionnaire de module cryptographique, et comprenant :
l'acquisition d'informations d'image d'un module cryptographique (S30) ;
la détermination d'une ressource matérielle requise pour l'exécution du module cryptographique sur la base des informations d'image du module cryptographique (S31) ;
générer une demande de création d'environnement informatique confidentiel sur la base de la ressource matérielle requise pour l'exécution du module cryptographique (S32) ; et
l'envoi de la demande de création d'environnement informatique confidentiel (S33), afin de permettre à un gestionnaire d'environnement confidentiel de créer un environnement informatique confidentiel correspondant à une exigence d'exécution du module cryptographique sur la base de la demande de création d'environnement informatique confidentiel, dans lequel l'exigence d'exécution du module cryptographique est compatible avec la ressource matérielle requise pour l'exécution du module cryptographique.

2. Procédé de création d'un environnement informatique confidentiel selon la revendication 1, dans lequel la détermination de la ressource matérielle requise pour l'exécution du module cryptographique sur la base des informations d'image du module cryptographique (S31) comprend :
la détermination d'un fichier de configuration de performances du module cryptographique sur la base des informations d'image du module cryptographique (S311) ; et
la détermination d'un nombre total de cœurs de processeur et d'une ressource mémoire nécessaires à l'exécution du module cryptographique sur la base du fichier de configuration de performances (S312).

3. Procédé de création d'un environnement informatique confidentiel selon la revendication 2, dans lequel la génération de la demande de création d'environnement informatique confidentiel sur la base de la ressource matérielle requise pour l'exécution du module cryptographique (S32) comprend : la génération de la demande de création d'environnement informatique confidentiel sur la base du nombre total de cœurs de processeur et de la ressource mémoire requise pour l'exécution du module cryptographique.

4. Procédé de création d'un environnement informatique confidentiel selon l'une quelconque des revendications 1 à 3, après l'envoi de la demande de création d'environnement informatique confidentiel (S33), comprenant en outre :
l'envoi des informations d'image du module cryptographique (S36), afin de permettre au gestionnaire d'environnement confidentiel de charger les informations d'image du module cryptographique dans l'environnement informatique confidentiel créé, permettant ainsi au module cryptographique d'être exécuté dans l'environnement informatique confidentiel.

5. Procédé de création d'un environnement informatique confidentiel, appliqué à un gestionnaire d'environnement confidentiel, et comprenant :
l'acquisition d'une demande de création d'environnement informatique confidentiel envoyée par un gestionnaire de module cryptographique (S34), dans laquelle la demande de création d'environnement informatique confidentiel est générée par le gestionnaire de module cryptographique sur la base d'une ressource matérielle requise pour l'exécution du module cryptographique, et la ressource matérielle requise pour l'exécution du module cryptographique est déterminée par le gestionnaire de module cryptographique sur la base d'informations d'image acquises du module cryptographique ; et
la création d'un environnement informatique confidentiel correspondant à une exigence d'exécution du module cryptographique sur la base de la demande de création d'environnement informatique confidentiel (S35), dans lequel l'exigence d'exécution du module cryptographique est compatible avec la ressource matérielle requise pour l'exécution du module cryptographique.

6. Procédé de création d'un environnement informatique confidentiel selon la revendication 5, dans lequel la demande de création d'un environnement informatique confidentiel comprend un nombre total de cœurs de processeur et une ressource mémoire requise pour l'exécution du module cryptographique.

7. Procédé de création d'un environnement informatique confidentiel selon la revendication 6, dans lequel la création de l'environnement informatique confidentiel correspondant aux exigences de fonctionnement du module cryptographique sur la base de la demande de création d'environnement informatique confidentiel (S35) comprend :
la configuration, sur la base du nombre total de cœurs de processeur, d'un nombre correspondant de cœurs de processeur pour l'environnement informatique confidentiel (S351) ; et
la configuration, sur la base de la ressource mémoire, d'une adresse mémoire correspondant à l'environnement informatique confidentiel (S352).

8. Procédé de création d'un environnement informatique confidentiel selon l'une quelconque des revendications 5 à 7, après la création de l'environnement informatique confidentiel correspondant aux exigences d'exécution du module cryptographique (S35), comprenant en outre :
l'acquisition des informations d'image du module cryptographique envoyées par le gestionnaire de module cryptographique, et le chargement des informations d'image du module cryptographique dans l'environnement de calcul confidentiel afin d'exécuter le module cryptographique dans l'environnement de calcul confidentiel (S37).

9. Procédé d'opération cryptographique, appliqué à un environnement informatique confidentiel créé par le procédé de création d'un environnement informatique confidentiel selon l'une quelconque des revendications 1 à 4 et/ou l'une quelconque des revendications 5 à 8, et comprenant :
l'acquisition d'un fichier de clés et l'obtention d'une clé pour une opération de cryptage sur la base du fichier de clés, par un module de cryptage (S71) ;
l'envoi, par une application cryptographique, d'une demande de vérification au module cryptographique afin de vérifier l'intégrité du module cryptographique (S72) ; et
en réponse à l'intégrité du module de cryptage, l'appel, par l'application de cryptage, du module de cryptage pour effectuer l'opération de cryptage (S73).

10. Procédé d'opération cryptographique selon la revendication 9, dans lequel le module cryptographique comprend une clé de scellage ;
l'obtention, par le module de cryptage, de la clé pour l'opération de cryptage sur la base du fichier de clés comprend : le décryptage, par le module de cryptage, du fichier de clés à l'aide de la clé de scellage afin d'obtenir la clé pour l'opération de cryptage ;
le module de cryptage utilise un module d'opération de cryptage pour aider à effectuer l'opération de cryptage ; et
l'appel, par l'application cryptographique, du module cryptographique pour effectuer l'opération cryptographique (S73) comprend : l'appel, par l'application cryptographique, du module cryptographique, et l'exécution, par le module cryptographique, de l'opération cryptographique à l'aide du module d'opération cryptographique.

11. Système d'exploitation cryptographique, comprenant au moins un module cryptographique (81), une application cryptographique (82), un gestionnaire de module cryptographique (83) et un gestionnaire d'environnement confidentiel (84),
dans lequel le gestionnaire de module cryptographique (83) et le gestionnaire d'environnement confidentiel (84) sont configurés pour créer un environnement informatique confidentiel correspondant à une exigence d'exécution du module cryptographique ;
le module cryptographique (81) est configuré pour acquérir un fichier de clés et obtenir une clé pour une opération cryptographique sur la base du fichier de clés dans l'environnement informatique confidentiel ; et
l'application de cryptage (82) est configurée pour envoyer une demande de vérification au module de cryptage (81) afin de vérifier l'intégrité du module de cryptage (81) dans l'environnement informatique confidentiel, dans lequel, en réponse à l'intégrité du module de cryptage (81), l'application de cryptage (82) invoque le module de cryptage (81) pour effectuer l'opération de cryptage.

12. Système d'opération cryptographique selon la revendication 11, dans lequel le gestionnaire de module cryptographique (83) comprend :
une unité d'acquisition d'informations (91), configurée pour acquérir des informations d'image du module cryptographique (81) ;
une unité de détermination de ressource (92), configurée pour déterminer une ressource matérielle requise pour l'exécution du module cryptographique (81) sur la base des informations d'image du module cryptographique (81) ;
une unité de génération de requête (93), configurée pour générer une demande de création d'environnement informatique confidentiel sur la base de la ressource matérielle requise pour l'exécution du module cryptographique (81) ; et
une unité d'envoi de requête (94), configurée pour envoyer la demande de création d'environnement informatique confidentiel, afin de permettre au gestionnaire d'environnement confidentiel (84) de créer l'environnement informatique confidentiel correspondant aux exigences d'exécution du module cryptographique (81) sur la base de la requête de création d'environnement informatique confidentiel, dans lequel les exigences d'exécution du module cryptographique (81) sont compatibles avec la ressource matérielle requise pour l'exécution du module cryptographique (81) ; et
le gestionnaire d'environnement confidentiel (84) comprend :
une unité d'acquisition de requête (101), configurée pour acquérir la demande de création d'environnement informatique confidentiel envoyée par le gestionnaire de module cryptographique (83) ; et
une unité de création d'environnement (102), configurée pour créer l'environnement informatique confidentiel correspondant aux exigences de fonctionnement du module cryptographique (81) sur la base de la demande de création d'environnement informatique confidentiel.

13. Système d'opération cryptographique selon la revendication 11 ou 12, comprenant en outre un module d'opération cryptographique (111) configuré pour assister le module cryptographique (81) dans l'exécution de l'opération cryptographique dans l'environnement informatique confidentiel.

14. Dispositif électronique, comprenant au moins une mémoire (3) et au moins un processeur (1), dans lequel la mémoire (3) stocke une ou plusieurs instructions exécutables par ordinateur ; et le processeur (1) invoque la ou les instructions exécutables par ordinateur pour mettre en œuvre le procédé de création d'un environnement informatique confidentiel selon l'une quelconque des revendications 1 à 4 et/ou l'une quelconque des revendications 5 à 8, et/ou pour mettre en œuvre le procédé d'opération cryptographique selon la revendication 9 ou 10.

15. Support de stockage, stockant une ou plusieurs instructions exécutables par ordinateur, dans lequel la ou les instructions exécutables par ordinateur, lorsqu'elles sont exécutées, mettent en œuvre le procédé de création d'un environnement informatique confidentiel selon l'une quelconque des revendications 1 à 4 et/ou l'une quelconque des revendications 5 à 8, et/ou mettent en œuvre le procédé d'opération cryptographique selon la revendication 9 ou 10.
